# EUROPEAN PATENT APPLICATION

(11) **EP 2 722 834 A1**
(43) Date of publication of application: **23.04.2014**
(21) Application number: 12817795.3
(22) Date of filing: 01.06.2012
(51) Int. Cl.: G08G 1/16, B60R 1/00, B60R 11/02, B60R 11/04, G01C 21/36

(54) **DRIVING ASSISTANCE APPARATUS FOR VEHICLE**

(30) Priority: 25.07.2011 JP 2011161949
(71) Applicant: Honda Motor Co., Ltd., Minato-ku Tokyo 107-8556 (JP)
(72) Inventor: WATANABE, Takashi, Wako-shi Saitama 351-0193 (JP); OSHIDA, Kei, Wako-shi Saitama 351-0193 (JP); NISHIGUCHI, Haruhiko, Wako-shi Saitama 351-0193 (JP)
(74) Representative: Prechtel, Jörg
(86) International application number: PCT/JP2012/064262
(87) International publication number: WO 2013/015021

(57) **Abstract**

A display control means (9) of this driving assistance apparatus is provided with: a function for displaying detailed guidance information (NVb) for navigation information upon a display (5) if the present location of a vehicle (2) is within an interval of detailed guidance; a function for switching the display state of the display (5) from one of the navigation information and the rear-side captured image to the other if operation of an operation switch for switching display (7) is performed in a case in which the present location of the vehicle (2) is not within the detailed guidance interval; and a function for displaying the rear-side captured image upon the display (5) if a travel path modification of the vehicle (2) is detected in a case in which the present location of the vehicle (2) is not within the detailed guidance interval. In addition, if the present location of the vehicle (2) is within the detailed guidance interval, display of the detailed guidance information is maintained regardless of detection of a travel path modification of the vehicle (2).

## Description

### Technical Field

The present invention relates to a driving assistance device which indicates a navigation information and a side-rearward captured image of a self-vehicle to an indicator.

As a driving assistance device for a vehicle, conventionally, there is proposed a navigation device which displays navigation information such as a map and a guide route to an indicator such as a liquid-crystal display. In this type of navigation device, heretofore known is a type in which an enlarged guide view of a specific place such as an intersection is automatically displayed, when a self-vehicle approaches the specific place (for example, refer to Patent Literature 1).

Further, a driving assistance device in which a region of a side-rearward of a vehicle is captured by a camera mounted to a door mirror of the vehicle, and the captured image is displayed on an indicator, is heretofore known (for example, refer to Patent Literature 2).

### Citation List

### Patent Literature

Patent Literature 1: Japanese Patent Application Laid-Open No. 2008-64517 Patent Literature 2: Japanese Patent Application Laid-Open No. 2006-51850

### Summary of Invention

### Technical Problem

Displaying the captured image of the side-rearward of the vehicle is generally highly necessary, in cases such as performing a course change of the vehicle. Therefore, it is conceivable to display the captured image of the side-rearward of the vehicle to the indicator automatically, in coordination with an ON-operation of a turn indicator and the like.

However, the existence of an inconvenience in this case has been found from the considerations by the inventors of the present application, such that in a device in which navigation information and the captured image of the side-rearward of the vehicle are displayed to a common indicator, a display state of the indicator is automatically changed to a state of displaying the captured image of the side-rearward of the vehicle, in a situation in which there is a high necessity of displaying the navigation information to the driver.

The present invention has been made in view of such background, and aims to provide a driving assistance device for a vehicle capable of performing display of the navigation information and the display of the captured image of the side-rearward of the vehicle, in a manner appropriately considering the necessity of the display thereof.

### Solution to Problem

In order to achieve the above-mentioned object, a driving assistance device for a vehicle of the present invention is equipped with a navigation device, a camera which captures at least either one of a side-rearward of a right side and a left side of the vehicle, and an indicator which displays navigation information output from the navigation device and an image captured by the camera, the driving assistance device comprising:
a display-change operation switch which outputs a display-change signal instructing a display state of the indicator to change from one of a state in which the navigation information is displayed and a state in which the captured image is displayed, to the other;
a course change detecting element which detects an existence or non-existence of a course change of the vehicle; and
a display control element which controls the display state of the indicator, according to a current position of the vehicle detected by the navigation device, an output of the display-change operation switch, and a detection result of the course change detecting element;
wherein
the display control element is configured to have a function of displaying at least a detailed guide information out of the navigation information to the indicator, in a case where the current position of the vehicle is a position inside a preliminarily set detailed guide zone, a function of changing the display state of the indicator from one of the state in which the navigation information is displayed and the state in which the captured image is displayed to the other, in a case where the display-change signal is output from the display-change operation switch in case the current position of the vehicle is a position outside the detailed guide zone, and a function of displaying the captured image to the indicator, in a case where a course change of the vehicle is detected by the course change detecting element in case the current position of the vehicle is the position outside the detailed guide zone, and also maintains the display of the detailed guide information to the indicator, without depending on the detection result of the course change detecting element, in a case where the current position of the vehicle is the position inside the detailed guide zone (a first aspect of the invention).

In the present invention, the course change of the vehicle means a right-turn or a left-turn of the vehicle in an intersection and the like, or a lane change in a road with a plurality of traffic lanes, or a course change for merging to the road planned to be travelled or branching from the traveling road and the like.

According to the first aspect of the invention, in a case where the display-change signal is output from the display-change operation switch (in a case where the display-change operation switch is operated), in case the current position of the vehicle (the self-vehicle) detected by the navigation device is the position outside the detailed guide zone, the display control element changes the display state of the indicator to one of the state in which the navigation information is displayed and the state in which the captured image is displayed to the other.

Specifically, in a case where the display state of the indicator is the state in which the navigation information is displayed, the display state is changed to the state indicating the captured image of the camera (the captured image of the side-rearward of the vehicle). Further, in a case where the display state of the indicator is the state in which the captured image of the camera is displayed, the display state is changed to the state indicating the navigation information.

By doing so, in a case where the current position of the vehicle (the self-vehicle) is the position outside the detailed guide zone, the driver may occasionally perform a desired display (the display of the navigation information or the captured image) to the indicator, by the operation of the display-change operation switch.

Further, in a case where the course change of the vehicle (the self-vehicle) is detected by the course change detecting element, in case the current position of the vehicle (the self-vehicle) detected by the navigation device is the position outside the detailed guide zone, the display control element displays the captured image to the indicator. By doing so, the side-rearward captured image of the vehicle is automatically displayed to the indicator, at the time of course change of the vehicle. Therefore, when planning to make the course change of the vehicle, the driver may perform safety confirmation of the side-rearward of the vehicle with the captured image displayed to the indicator.

On the other hand, in a case where the current position of the vehicle is the position inside the detailed guide zone, the display control element displays at least the detailed guide information out of the navigation information to the indicator. The detailed guide zone is a zone preliminarily set as a zone in which the detailed guide information, such as an enlarged view of the road in the zone or the lane on which the self-vehicle must travel, should preferably be provided to the driver. The detailed guide zone is, for example, a zone in the vicinity of an intersection, a merging point or a branching point.

The detailed guide information is displayed to the indicator, in a case where the self-vehicle exists inside such detailed guide zone. By doing so, the driver may confirm detailed road information in the vicinity of the current position of the self-vehicle.

In a case where the current position of the vehicle is the position inside the detailed guide zone, there is a high necessity to display the detailed guide information to the indicator, and to have the driver immediately confirm the display, so as to make it easy for the driver to recognize an appropriate travel path of the self-vehicle and the like.

Therefore, in the first aspect of the invention, the display control element maintains the display of the detailed guide information to the indicator, in a case where the current position of the vehicle is the position inside the detailed guide zone, without depending on the detection result of the course change detecting element. By doing so, in a case where the current position of the vehicle is the position inside the detailed guide zone, the detailed guide information is continued to be displayed to the indicator, not only in case the course change of the vehicle (self-vehicle) is not detected by the course change detecting element, but also in case the course change is detected, so that the display of the detailed guide information, which is highly necessary for the driver, will not automatically be deleted.

Therefore, in a case where the current position of the vehicle is the position inside the detailed guide zone, the driver may confirm the detailed guide information occasionally, without requiring special operation.

As such, according to the first aspect of the invention, it becomes possible to perform the display of the navigation information and the display of the captured image of the side-rearward of the vehicle, in a manner appropriately considering the necessity of the display thereof. Consequently, it becomes possible to perform display with high convenience for the driver to the indicator.

In the above-mentioned first aspect of the invention, preferably the course change detecting element detects the existence or non-existence of the course change of the vehicle, at least based on an operating state of a turn indicator of the vehicle (a second aspect of the invention).

According to the second aspect of the invention, it becomes possible to detect the existence or non-existence of the course change of the vehicle, while appropriately reflecting the intention of the driver.

In the first aspect of the invention or the second aspect of the invention explained above, in a case where the current position of the vehicle (the self-vehicle) is the position inside the detailed guide zone, there may be cases where the driver has small necessity for the display of the detailed guide information, and desires the display of the captured image of the side-rearward of the vehicle by the camera.

Therefore, in the above-mentioned first aspect of the invention, preferably the display control element displays the captured image to the indicator, without displaying the detailed guide information to the indicator, in a case where the display-change signal is output from the display-change operation switch in case the current position of the vehicle is the position inside the detailed guide zone, until the display-change signal is output again (a third aspect of the invention).

According to the third aspect of the invention, in a case where the current position of the vehicle (the self-vehicle) is the position inside the detailed guide zone, the captured image is displayed to the indicator, by operating the display-change operation switch.

By doing so, in a case where the driver desires the display of the captured image of the side-rearward of the vehicle by the camera, rather than a detailed guide display, the display of the captured image may be arbitrarily performed, by the operation of the display-change operation switch. Therefore, it becomes possible to further improve the convenience of the display of the indicator.

Further, in the first to the third aspects of the invention, in a case where the display state of the indicator immediately before the current position of the vehicle (the self-vehicle) is changed from the position outside the detailed guide zone to the position inside the detailed guide zone is the state in which the captured image is displayed, it is conceivable that there is a high possibility that the driver desires the display of the captured image, even inside the detailed guide zone.

Therefore, preferably, the display control element displays the captured image and the detailed guide information to the indicator, in a case where the current position of the vehicle is changed from the position outside the detailed guide zone to the position inside the detailed guide zone, at a state in which the captured image is displayed to the indicator, until the current position of the vehicle thereafter is changed to the position outside the detailed guide zone, or until the display-change signal is output from the display-change operation switch (a fourth aspect of the invention).

According to the fourth aspect of the invention, in a case where the current position of the vehicle is changed from the position outside the detailed guide zone to the position inside the detailed guide zone, at a state in which the captured image is displayed to the indicator, the display of the captured image is not automatically deleted in the detailed guide zone, and the captured image is displayed to the indicator together with the detailed guide information. By doing so, even when the self-vehicle enters the detailed guide zone, the driver may continuously confirm the captured image of the side-rearward of the vehicle.

In the fourth aspect of the invention, in a case where the current position of the vehicle is the position inside the detailed guide zone, the display of the detailed guide information to the indicator is maintained, without depending on the detection result of the course change detecting element, as is explained with respect to the first aspect of the invention. Therefore, in a case where the captured image and the detailed guide information are displayed to the indicator, as is explained above, in case the current position of the vehicle is the position inside the detailed guide zone, the display of the captured image and the detailed guide information are consequently maintained, without depending on the detection result of the course change detecting element.

Further, in the fourth aspect of the invention, in a case where the display-change signal is output from the display-change operation switch (in a case where the display-change operation switch is operated), at a state in which the current position of the vehicle is the position inside the detailed guide zone, it is preferable that the captured image is displayed to the indicator, without displaying the detailed guide information to the indicator, until the display-change signal is output again, for example similarly to the second aspect of the invention.

Further, in the fourth aspect of the invention, in a case where the current position of the vehicle is changed from the position inside the detailed guide zone to the position outside the detailed guide zone, with no display-change signal output from the display-change operation switch, it is preferable that the captured image is displayed to the indicator, similarly to the display before the current position of the vehicle is changed to the position inside the detailed guide zone.

In the first through the fourth aspects of the invention explained above, in a case where the camera is the camera capturing the side-rearward of only one side of the right side and the left side of the vehicle, then the display of the captured image of the camera is generally highly necessary in a case where the vehicle is making course change to the one side out of the right side and the left side of the vehicle. Further, the display of the captured image of the camera is hardly necessary, during course change of the vehicle to the opposite side of the one side (the other side).

Therefore, in the above-mentioned first through fourth aspects of the invention, preferably the display control element displays the captured image to the indicator, in a case where the course change of the vehicle to the one side out of the right side and the left side of the vehicle is detected by the course change detecting element, at a state in which the current position of the vehicle is the position outside the detailed guide zone and also the navigation information is displayed to the indicator, and maintains the display of the navigation information to the indicator, without displaying the captured image to the indicator, in a case where the course change of the vehicle to the other side out of the right side and the left side of the vehicle is detected by the course change detecting element in such state (a fifth aspect of the invention).

According to the fifth aspect of the invention, during the course change to the vehicle to the other side of the right side and the left side of the vehicle (the opposite side to the one side), the display of the captured image of the camera to the indicator is not performed. Therefore, it becomes possible to avoid the display of the captured image which is hardly necessary for the driver from being automatically performed.

Further, in the first through the fourth aspects of the invention, the camera may be configured from a right camera which captures a right-rearward of the vehicle, and a left camera which captures a left-rearward of the vehicle. In such case, especially in the fourth aspect of the invention, preferably the display control element displays the captured image of the right camera to the indicator, in a case where the course change to the right side of the vehicle is detected by the course change detecting element, at a state in which the current position of the vehicle is the position outside the detailed guide zone, and also the navigation information is displayed to the indicator, and displays the captured image of the left camera to the indicator, in a case where the course change to the left side of the vehicle is detected by the course change detecting element in such state. Further, preferably the display control element displays the captured image and the detailed guide information to the indicator, such that the captured image of the right camera or the captured image of the left camera is positioned to a same side as the camera out of a right side and a left side of the indicator, and also the detailed guide information is positioned to the opposite side thereof, in a case where the current position of the vehicle is changed from the position outside the detailed guide zone to the position inside the detailed guide zone, in a state in which the captured image of the right camera or the left camera is displayed, until the current position of the vehicle is thereafter changed to the position outside the detailed guide zone, or the display-change signal is output from the display-change operation switch (a sixth aspect of the invention).

According to the sixth aspect of the invention, when the driver performs the course change of the vehicle (the self-vehicle), at a state in which the current position of the vehicle is the position outside the detailed guide zone, and also the navigation information is displayed to the indicator, the captured image of the side-rearward of the vehicle by the camera on the same side as the course change (the right side or the left side) is automatically displayed to the indicator.

By doing so, the driver may confirm by the display of the indicator, a captured image of the side-rearward of the vehicle at a side to which the course of the self-vehicle is to be changed.

Further, in a case where the current position of the vehicle is changed from the position outside the detailed guide zone to the position inside the detailed guide zone, in a state in which the captured image of the right camera or the left camera is displayed, that is, in a case where the captured image and the detailed guide information are displayed to the indicator as is explained in the third aspect of the invention, the display control element displays the captured image and the detailed guide information to the indicator, such that the captured image of the right camera or the captured image of the left camera is positioned to a same side as the camera out of a right side and a left side of the indicator, and also the detailed guide information is positioned to the opposite side thereof, until the current position of the vehicle is thereafter changed to the position outside the detailed guide zone, or the display-change signal is output from the display-change operation switch.

Therefore, in a case where the captured image of the right camera and the detailed guide information are displayed to the indicator, the captured image and the detailed guide information are displayed to the indicator, such that the captured image of the right camera is positioned to the right side of the indicator, and the detailed guide information is positioned to the left side of the indicator.

Further, in a case where the captured image of the left camera and the detailed guide information are displayed to the indicator, the captured image and the detailed guide information are displayed to the indicator, such that the captured image of the left camera is positioned to the left side of the indicator, and the detailed guide information is positioned to the right side of the indicator.

As such, a corresponding relationship between the display position of the captured image in the indicator, and which of the left and the right camera the captured image was captured by, matches. As a result, the driver may immediately and correctly recognize which of the captured image of the left and the right camera is displayed to the indicator.

### Brief Description of the Drawings

Figs. 1 is a block diagram showing a configuration of a driving assistance device according to a first embodiment of the present invention;
Fig. 2 is a view showing a configuration of a vehicle in the first embodiment (or a second embodiment);
Fig. 3 is a view showing a capturing region by a camera mounted on the vehicle in the first embodiment;
Figs. 4 is a view showing an example of transition of a display on an indicator in the first embodiment;
Fig. 5 is a view showing an example of a traveling manner of the vehicle in the first embodiment;
Fig. 6 is a view showing an example of a transition of the display on the indicator in the first embodiment;
Fig. 7 is a view showing an example of a transition of the display on the indicator in the first embodiment;
Fig. 8 is a block diagram showing a configuration of the driving assistance device in the second embodiment of the present invention;
Fig. 9 is a view showing a capturing region by the camera mounted on the vehicle in the second embodiment;
Fig. 10 is a view showing an example of the transition of the display on the indicator in the second embodiment; and
Figs. 11A 11B and 11C are views showing example of display state of the indicator in the second embodiment.

### Description of Embodiments

### [First Embodiment]

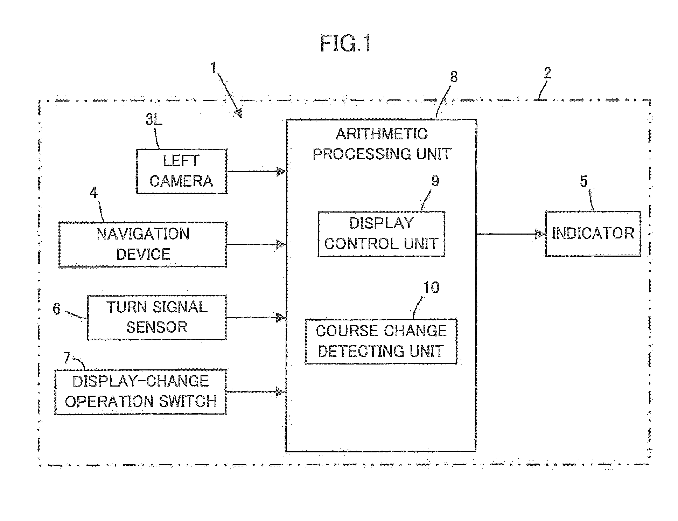

A first Embodiment of a driving assistance device of the present invention will be explained with reference to Fig. 1 through Fig. 7.

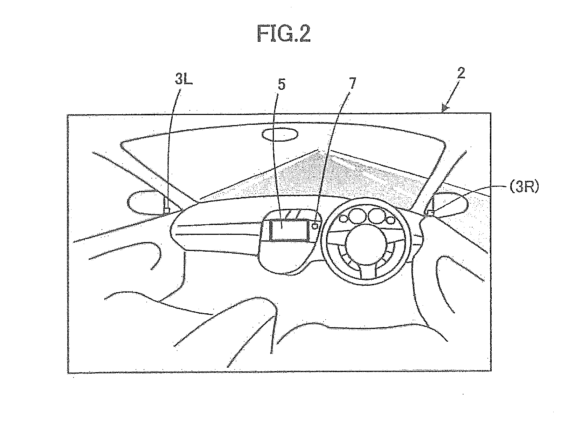

With reference to Fig. 1, the driving assistance device 1 of the present embodiment is used by being mounted on a vehicle 2 of a light-hand drive (refer to Fig. 2), for example. The driving assistance device 1 is equipped with a camera 3L which captures a left-rearward of the vehicle 2 (hereinafter referred to as the left camera 3L), a navigation device 4, an indicator 5 for displaying the captured images of the left camera 3L and navigation information thereon, a turn signal sensor 6 which detects an operation state of a turn signal (not shown) as a direction indicator of the vehicle 2, a display-change operation switch 7 for performing changing of the display of the indicator 5, and an arithmetic processing unit 8 which performs control processing such as a display control of the indicator 5.

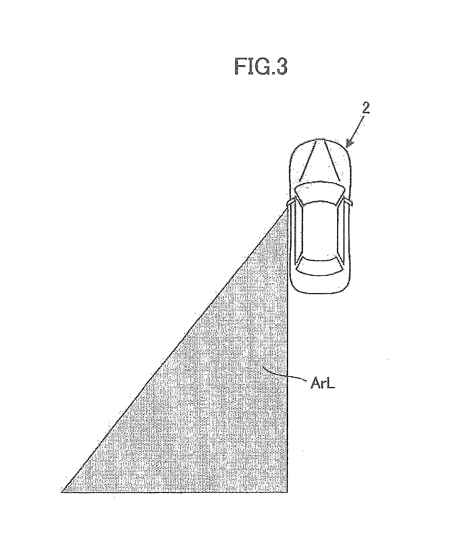

The left camera 3L is configured from a CCD camera, a CMOS camera and the like. As is shown in Fig. 2, the left camera 3L is mounted to a side on a left front side of the vehicle 2, for example to a left door mirror. The left camera 3L captures a left-rearward region ArL of the vehicle 2 (the self-vehicle 2), as is shown as a stippled region in Fig. 3, and outputs the captured image data to the arithmetic processing unit 8.

In Fig. 2, the element allotted with a reference number 3R with brackets is a camera (a right camera) to be equipped in a second embodiment to be explained later, and this camera 3R is not equipped in the present embodiment.

The navigation device 4 is a heretofore known device with a navigation function such as a function of sequentially detecting a current position of the self-vehicle 2 using a GPS or an inertial navigation method, a function of matching the detected position of the self-vehicle 2 with a map data, and a function of setting a guidance path of the self-vehicle 2 to a destination, and the like.

The navigation device 4 outputs to the arithmetic processing unit 8 a navigation information configured from the detected current position of the self-vehicle 2, the map data of surroundings of the self-vehicle 2, the guidance path information, and a detailed guide information of a specified detailed guide zone (a zone in a vicinity of an intersection, a branching point, a merging point and the like) of a road on which the self-vehicle 2 is traveling. In this case, the detailed guide information contains data of an enlarged guide view of the vicinity of the detailed guide zone, a scheduled course of the self-vehicle 2 at a specific point, and the like.

The indicator 5 is a monitor configured from a liquid-crystal display and the like, and as is shown in Fig. 2, is mounted at a position forward of a driving sheet in an interior of the vehicle 2, for example to a dashboard, so as to enable a driver to view the same.

The turn signal sensor 6 detects ON/OFF of each of a left turn signal and a right turn signal of the vehicle 2, and outputs signals corresponding thereto to the arithmetic processing unit 8. Such turn signal sensor 6 may be a heretofore known sensor.

As is shown in Fig. 2, the display-change operation switch 7 is a switch disposed in the vicinity of the indicator 5, and which is capable of being press-operated. When the press-operation is performed, the display-change operation switch 7 output a signal indicating the same to the arithmetic processing unit 8. The display-change operation switch 7 may be disposed on a handle, a turn signal lever and the like of the vehicle 2.

The arithmetic processing unit 8 is an electronic circuit unit configured from a CPU, a RAM, a ROM, an interface circuit and the like, and is disposed at an appropriate location of the vehicle 2. In the present embodiment, the arithmetic processing unit 8 is equipped with, as a function realized by an implemented program or a hardware configuration and the like, a display control unit 9 which controls the display of the indicator 5, and a course change detecting unit 10 which detects existence or non-existence of a course change of the self-vehicle 2.

The display control unit 9 and the course change detecting unit 10 respectively corresponds to a display control element and a course change detecting element of the present invention.

More detailed processing by the arithmetic processing unit 8 will explained below.

The arithmetic processing unit 8 acquires, in a predetermined control processing cycle, the image data of the captured image (the captured image of the left-rearward of the vehicle 2) of the left camera 3L, the navigation information output from the navigation device 4, the output of the turn signal sensor 6, and the output of the display-change operation switch 7.

Thereafter, the arithmetic processing unit 8 executes the processing of the course change detecting unit 10 and the display control unit 9 in each control processing cycle.

In this case, the course change detecting unit 10 is input with the output of the turn signal sensor 6. Thereafter, on the basis of the output of the turn signal sensor 6 of the self-vehicle 2 which indicates the operating state (ON/OFF) of each of the left turn signal and the right turn signal, the course change detecting unit 10 detects existence or non-existence of the course change of the self-vehicle 2 (the course change which performs right or left turn, lane change, merge to a road scheduled to be traveled, branch (depart) from a traveling road, and the like). In this case, the course change detecting unit 10 detects the existence or non-existence of the course change of the self-vehicle 2, distinguishing the course change to right side and the course change to left side.

Other than the output of the turn signal sensor 6, the existence or non-existence of the course change of the self-vehicle 2 may be detected on the basis of time-series data and map data of the position of the self-vehicle 2 out of the navigation information of the navigation device 4, or a detected data of a steering angle of the self-vehicle 2. In such case, the course change may be detected even in a case where the course change of the vehicle is performed without operating the turn signal of the vehicle 2.

The arithmetic processing unit 8 subsequently executes the processing of the display control unit 9. The display control unit 9 is input with the navigation information of the navigation device 4, the output of the display-change operation switch 7 (signal indicating the existence or non-existence of the press-operation of the switch 7), and the detection result of the course change detecting unit 10.

Thereafter, the display control unit 9 determines the content to be displayed to the indicator 5, on the basis of these input data. Further, the display control unit 9 controls the display of the indicator 5, according to the determined display content.

The display control is classified broadly into whether the current position of the self-vehicle 2 indicated by the navigation information is a position inside the detailed guide zone or a position outside the detailed guide zone.

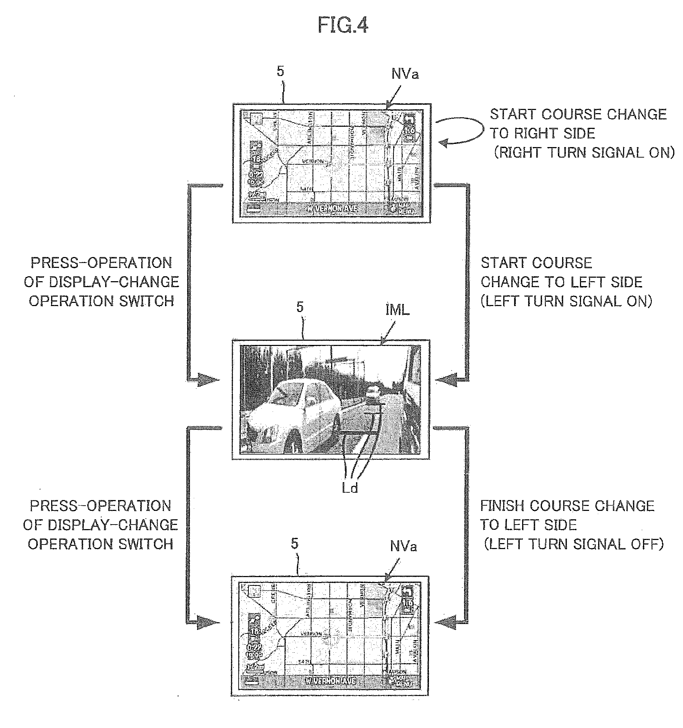

In a case where the current position of the self-vehicle 2 is in the position outside the detailed guide zone, the display control unit 9 normally indicates an image NVa which includes an image of a map of the surrounding of the self-vehicle 2, which is indicated by the map data among the navigation information, and a mark indicating the current position of the self-vehicle 2, as a main constituent element thereof (hereinafter referred to as a normal navigation image NVa) to the indicator 5, as is shown in a view in a first (uppermost) row in Fig. 4. In a case where the guidance path to the destination is set, then a mark indicating the guiding path is displayed in the normal navigation image NVa.

In a case where the display-change operation switch 7 is press-operated, or in a case where the course change to the left side of the self-vehicle 2 is detected by the course change detecting unit 10, at a state in which the normal navigation image NVa is displayed to the indicator 5 as above, the display control unit 9 changes the display of the indicator 5 from the normal navigation image NVa.

Specifically, the display control unit 9 indicates a latest captured image of the left camera 3L (the left-rearward captured image of the vehicle 2, hereinafter referred to as a left-rearward image IML) which is imported to the arithmetic processing unit 8, instead of the normal navigation image NVa, to the indicator 5, as is shown in a view of a second row in Fig. 4.

Therefore, in a case where a driver of the vehicle 2 press-operates the display-change operation switch 7 with a desire of viewing the left-rearward image IML, or in a case where the driver intends to make the vehicle 2 course change to the left side (in the present embodiment, when the left turn signal is ON-operated), the displayed image of the indicator 5 is changed from the normal navigation image NVa to the left-rearward image IML.

In the present embodiment, as is shown in the view of the second row in Fig. 4, a distance confirmation line Ld which gives an indication of a distance from the self-vehicle 2 is added to the left-rearward image IML.

Thereafter, in a case where the display-change operation switch 7 is again press-operated, after the display of the indicator 5 is changed from the normal navigation image NVa to the left-rearward image IML in response to the press-operation of the display-change operation switch 7, the display control unit 9 resumes the displayed image of the indicator 5 from the left-rearward image IML to the normal navigation image NVa, as is shown in a view of a third (lowermost) row in Fig. 4.

Further, even in a case where the detection of the course change to the left side of the vehicle 2 by the course change detecting unit 10 is dissolved (in a case where the course change to the left side is finished), after the display of the indicator 5 is changed from the normal navigation image NVa to the left-rearward image IML in response to the detection of the course change to the left side of the vehicle 2 (detection of a start of the course change to the left side), the display control unit 9 resumes the display of the indicator 5 from the left-rearward image IML to the normal navigation image NVa, in a same manner as described above.

Further, also in a case where the display-change operation switch 7 is again press-operated, after the display of the indicator 5 is changed from the normal navigation image NVa to the left-rearward image IML in response to the detection of the course change to the left side of the vehicle 2, and before the detection of the course change to the left side of the vehicle 2 by the course change detecting unit 10 is dissolved, the display control unit 9 resumes the display of the indicator 5 from the left-rearward image IML to the normal navigation image NVa, in a same manner as described above.

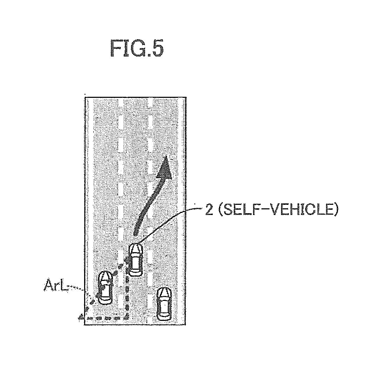

In a case where the self-vehicle 2 is course changed to the right side, generally, there is a small necessity for the driver to confirm the left-rearward image IML. Therefore, in the present embodiment, in a case where the start of the course change to the right side of the self-vehicle 2 is detected by the course change detecting unit 10 (in the present embodiment, in a case where a right turn signal is ON-operated), at a state in which the normal navigation image NVa is displayed to the indicator 5, the display control unit 9 maintains the image displayed to the indicator 5 to the normal navigation image NVa, as is shown in the view of the first (the uppermost) row in Fig. 4. Therefore, in the present embodiment, in a case where the self-vehicle 2 is made to course change to the right side as is shown in Fig. 5, the left-rearward image IML is not displayed to the indicator 5, and the displayed image of the indicator 5 is maintained to the normal navigation image NVa.

The above-explained is the display control of the indicator 5, in a case where the current position of the self-vehicle 2 is the position outside the detailed guide zone.

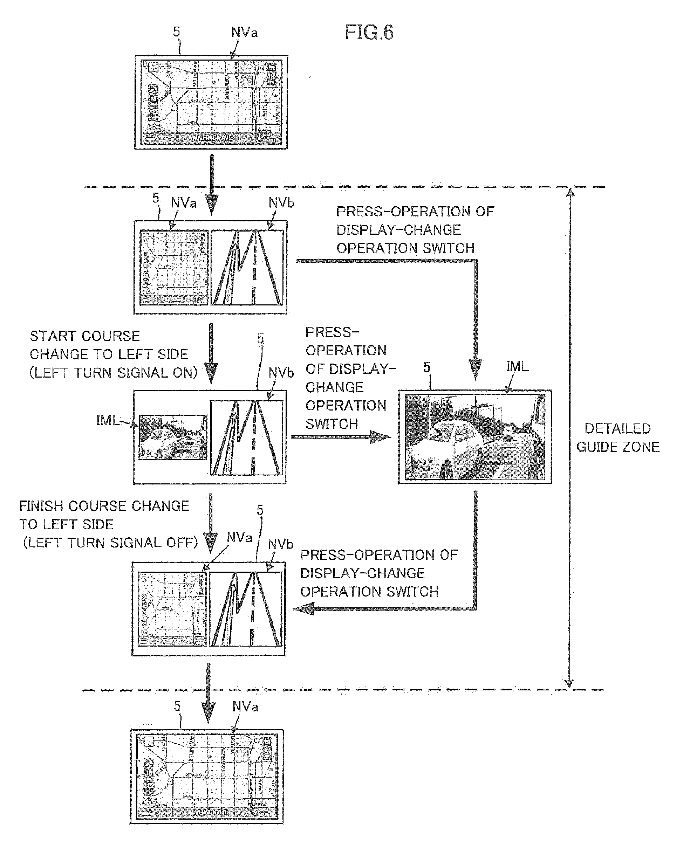

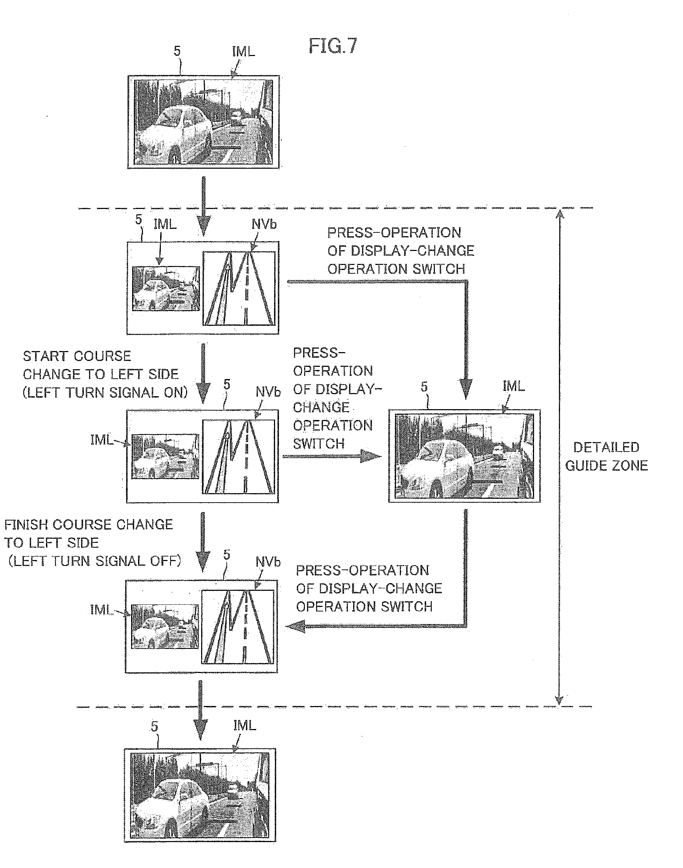

Next, in a case where the current position of the self-vehicle 2 is changed from the position outside the detailed guide zone to the position inside the detailed guide zone, the display control unit 9 displays an image NVb of the detailed guide information (hereinafter referred to as a detailed guide image NVb), which includes an enlarged image of a substantial part of the detailed guide zone (the intersection, the merging point, the branching point and the like) as a main constitutional element thereof, to a right screen area of the indicator 5, and at the same time, displays the normal navigation image NVa or the left-rearward image IML to a left screen area of the indicator 5 as is shown in a view of a second row of FIG. 6 or in a view of a second row of FIG. 7.

However, the normal navigation image NVa or the left-rearward image IML to be displayed to the left screen area of the indicator 5 is an image reduced from the image in a case where the current position of the self-vehicle 2 is the position outside the detailed guide zone (the image shown in Fig. 4).

In a case where the guidance path to the destination is set, the detailed guide image NVb includes a mark indicating the guidance path of the self-vehicle 2 in the substantial part of the detailed guide zone.

The image out of the normal navigation image NVa and the left-rearward image IML to be displayed to the left screen area of the indicator 5 is determined in response to the display of the indicator 5 immediately before the self-vehicle 2 enters the detailed guide zone.

Specifically, in a case where the normal navigation image NVa is displayed to the indicator 5, immediately before the current position of the self-vehicle 2 is changed from the position outside the detailed guide zone to the position inside the detailed guide zone, the display control unit 9 displays a reduced image of the normal navigation image NVa to the indicator 5 at the left side of the detailed guide image NVb, as is shown in Fig. 6.

Further, in a case where the left-rearward image IML is displayed to the indicator 5, immediately before the current position of the self-vehicle 2 is changed from the position outside the detailed guide zone to the position inside the detailed guide zone, the display control unit 9 displays a reduced image of the left-rearward image IML to the indicator 5 at the left side of the detailed guide image NVb, as is shown in Fig. 7.

Thereafter, at a state in which the current position of the self-vehicle 2 is the position inside the detailed guide zone, the display control unit 9 performs the display control of the indicator 5, in a manner different in a case where the press-operation of the display-change operation switch 7 is performed, and in a case where the course change (the course change to the left side) of the vehicle 2 is detected by the course change detecting unit 10.

Specifically, first, a case where the normal navigation image NVa is displayed to the indicator 5 immediately before the current position of the self-vehicle 2 is changed from the position outside the detailed guide zone to the position inside the detailed guide zone (a case of Fig. 6), is assumed.

In this case, in a case where the course change to the left side of the self-vehicle 2 is detected by the course change detecting unit 10 (in a case where the course change to the left side is started), after the current position of the self-vehicle 2 is changed to the position inside the detailed guide zone, the display control unit 9 changes the displayed image of the left screen area from the normal navigation image NVa to the left-rearward image IML, while maintaining the display of the detailed guide image IML to the right screen area of the indicator 5, as is shown in a left view of a third row in Fig. 6.

Further, in a case where the detection of the course change by the course change detecting unit 10 is dissolved (in a case where the course change is finished), at a state in which the current position of the self-vehicle 2 is the position inside the detailed guide zone, the display control unit 9 resumes the displayed image of the left screen area from the left-rearward image IML to the normal navigation image NVa, while maintaining the display of the detailed guide image NVb to the right screen area of the indicator 5, as is shown in a view of a fourth row in Fig. 6.

In a case where the course change to the right side of the self-vehicle 2 is detected by the course change detecting unit 10, the display state of the indicator 5 is retained at a state of the view of the second row in Fig. 6 (a state of indicating the normal navigation image NVa and the detailed guide image NVb).

Further, in a case where the press-operation of the display-change operation switch 7 is performed, at a state in which the current position of the self-vehicle 2 is the position inside the detailed guide zone, it is conceivable that the driver is desirous of actively confirming the left-rearward of the self-vehicle 2 with the left-rearward image IML.

Therefore, in such case, the display control unit 9 displays only the left-rearward image IML to the indicator 5, as is shown in a right view of the third row in Fig. 6, without performing the display of the detailed guide image NVb or the normal navigation image NVa, in either case of a case where the normal navigation image NVa and the detailed guide image NVb are displayed to the indicator 5 and a case where the left-rearward image IML and the detailed guide image NVb are displayed to the indicator 5.

Further, in a case where the press-operation of the display-change operation switch 7 is performed again, at a state in which the current position of the self-vehicle 2 is the position inside the detailed guide zone, the display control unit 9 resumes the display state of the indicator 5 to the display state immediately after the current position of the self-vehicle 2 is changed from the position outside the detailed guide zone to the position inside the detailed guide zone (in this case, a state of indicating the normal navigation image NVa and the detailed guide image NVb).

In a state where the press-operation of the display-change operation switch 7 is performed, at a state in which the current position of the self-vehicle 2 is the position inside the detailed guide zone, and when the normal navigation image NVa and the detailed guide image NVb are displayed to the indicator 5, the displayed image in the left screen area of the indicator 5 may be changed from the normal navigation image NVa to the left-rearward image IML, while maintaining the display of the detailed guide image NVb to the right screen area.

Next, a case where the left-rearward image IML is displayed to the indicator 5, immediately before the current position of the self-vehicle 2 is changed from the position outside the detailed guide zone to the position inside the detailed guide zone (a case of Fig. 7), is assumed.

In this case, in a case where the course change to the left side of the self-vehicle 2 is detected by the course change detecting unit 10 (in a case where the course change to the left side is started), after the current position of the self-vehicle 2 is changed to the position inside the detailed guide zone, the display control unit 9 retains the current display state (a state of displaying the left-rearward image IML and the detailed guide image NVb), without changing the display state of the indicator 5, including a case where the detection of the course change is dissolved (in a case where the course change is finished), as is shown in a left view of a third row and a view of a fourth row in Fig. 7.

Retaining the display state of the indicator 5 holds true in a case where the course change to the right side of the self-vehicle 2 is detected.

Further, in a case where the press-operation of the display-change operation switch 7 is performed, at a state in which the current position of the self-vehicle 2 is the position inside the detailed guide zone, similarly to the case of Fig. 6, the display control unit 9 displays only the left-rearward image IML to the indicator 5, without performing the display of the detailed guide image NVb or the normal navigation image NVa, as is shown in a right view of the third row in Fig. 7.

Further, in a case where the press-operation of the display-change operation switch 7 is performed again, at a state in which the current position of the self-vehicle 2 is the position inside the detailed guide zone, the display control unit 9 resumes the display state of the indicator 5 to the display state immediately after the current position of the self-vehicle 2 is changed from the position outside the detailed guide zone to the position inside the detailed guide zone (in this case, the state of displaying the left-rearward image IML and the detailed guide image NVb).

In a case where the press-operation of the display-change operation switch 7 is performed again, after displaying only the left-rearward image IML to the indicator 5, at a state in which the current position of the self-vehicle 2 is the position inside the detailed guide zone, the normal navigation image NVa and the detailed guide image NVb may be displayed to the indicator 5, similarly to the case shown in the view of the second row in Fig. 6.

Further, in either case of Fig. 6 and Fig. 7, in a case where the current position of the self-vehicle 2 is changed from the position inside the detailed guide zone to the position outside the detailed guide zone, at a state in which the detailed guide image NVb is displayed, the display control unit 9 dissolves the display of the detailed guide image NVb, as is shown in a view of a fifth (lowermost) row in Fig. 6 or Fig. 7. Thereafter, the display control unit 9 displays an enlarged image of the normal navigation image NVa or the left-rearward image IML, which had been displayed to the left screen area of the indicator 5 immediately before (the normal navigation image NVa or the left-rearward image IML shown in Fig. 4) to the indicator 5.

The above is the display control of the indicator 5, in a case where the current position of the self-vehicle 2 is changed from the position outside the detailed guide zone to the position inside the detailed guide zone.

According to the present embodiment explained above, in a situation where the vehicle 2 is traveling in the detailed guide zone, the detailed guide image NVb, which has high importance to the driver as the information in the detailed guide zone, is displayed continuously to the indicator 5, unless the driver intentionally performs the press-operation of the display-change operation switch 7.

Therefore, the display of the detailed guide image NVb will not be automatically deleted without explicit request from the driver. Therefore, in a situation where the vehicle 2 is traveling in the detailed guide zone, the driver is capable of confirming the detailed guide image having high importance continuously and without any problem.

Further, when the driver press-operates the display-change operation switch 7, it becomes possible to display only the left-rearward image IML to the indicator 5, without displaying the detailed guide image NVb, according to need. Therefore, the driver may display the left-rearward image IML to the indicator 5, during course change to the left side of the self-vehicle 2 and the like, according to need. By doing so, the driver may actively confirm the left-rearward state of the self-vehicle 2.

Further, in a case where the current position of the self-vehicle 2 is changed from the position inside the detailed guide zone to the position outside the detailed guide zone, the display control unit 9 displays the displayed image immediately before the change (the normal navigation image NVa or the left-rearward image IML) to the indicator 5, together with the detailed guide image NVb Therefore, the displayed image that the driver was observing immediately before the change will not be automatically deleted from the indicator 5 immediately after the change, without the request from the driver.

Therefore, according to the present embodiment, it becomes possible to display the navigation information constituted from the normal navigation image NVa and the detailed guide image NVb, and the display of the captured image of rearward (in the present embodiment, left-rearward) of the vehicle 2, to the indicator 5, in a manner appropriately reflecting the request or the necessity of the driver.

### [Second embodiment]

Next, a second embodiment of the present invention will be explained with reference to Fig. 1 and Figs. 8 through 11. The present embodiment differs from the first embodiment in a part of the configuration and processing, so that the explanation will be mainly given on the differences. The detailed explanation of the same configuration and processing as the first embodiment will be omitted.

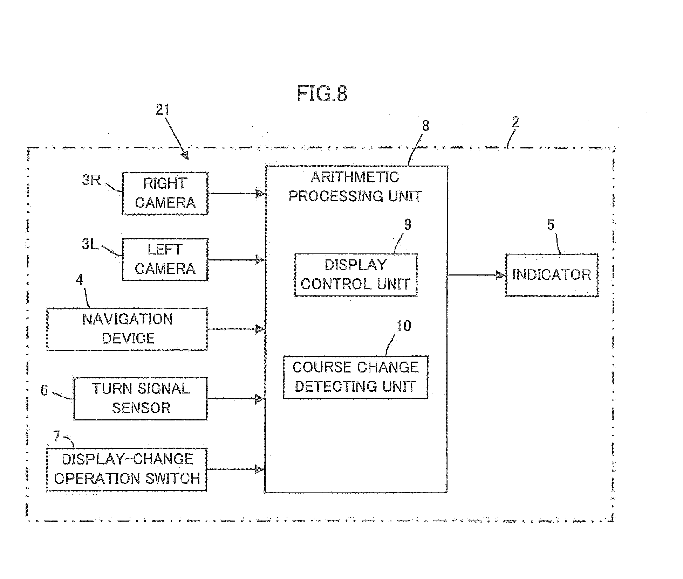

With reference to Fig. 8, a driving assistance device 21 of the present embodiment is equipped with, similar to the first embodiment, the left camera 3L, the navigation device 4, the indicator 5, the turn signal sensor 6, the display-change operation switch 7, and the arithmetic processing unit 8, and in addition thereto, a camera 3R (hereinafter referred to as a right camera 3R) which captures a right rearward of the vehicle 2.

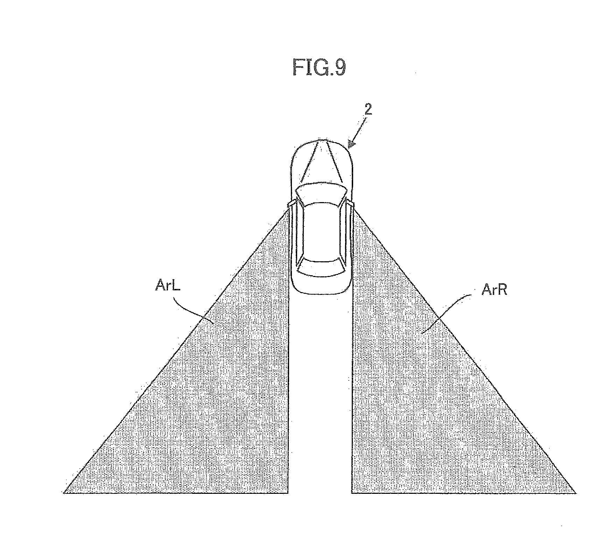

The right camera 3R is, similar to the left camera 3L, configured from a CCD camera, a CMOS camera and the like. As is indicated by a reference number with brackets in Fig. 2, the right camera 3R is mounted to a side on a right front side of the vehicle 2, for example to a right door mirror. As is shown in Fig. 9, the right camera 3R captures a right-rearward region ArR of the vehicle 2 (the self-vehicle 2), and outputs the captured image data to the arithmetic processing unit 8.

Therefore, also in the present embodiment, the arithmetic processing unit 8 is equipped with, as a function thereof, the display control unit 9 and the course change detecting unit 10. However, in the present embodiment, a part of the manner of the display control of the indicator 5 by the display control unit 9 differs from the first embodiment.

Hereinafter, the display control of the indicator 5 in the present embodiment will be explained mainly for matters differing from the first embodiment.

The display control unit 9 is input with, similar to the first embodiment, the navigation information of the navigation device 4, the output of the display-change operation switch 7, and the detection result of the course change detecting unit 10.

Thereafter, the display control unit 9 determines the content to be displayed on the indicator 5, on the basis of these input data. Further, the display control unit 9 controls the display of the indicator 5, according to the determined display content.

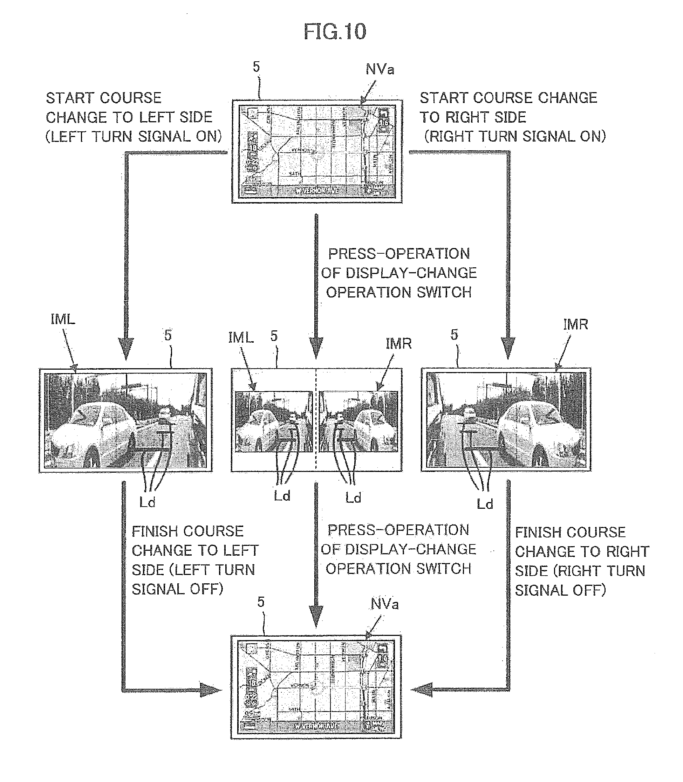

First, in a case where the current position of the self-vehicle 2 indicated by the navigation information is the position outside the detailed guide zone, the display control unit 9 in normal times displays, similarly to the first embodiment, the normal navigation image NVa to the indicator 5 (refer to a view in a first (uppermost) row in Fig. 10).

Thereafter, the display control unit 9 changes the displayed image of the indicator 5 from the normal navigation image NVa to either one or both of the captured images of the left camera 3L and the right camera 3R, on the basis of the press-operation of the display-change operation switch 7, or the detection of the course change of the self-vehicle 2 by the course change detecting unit 10.

Specifically, in a case where the display-change operation switch 7 is press-operated at a state in which the normal navigation image NVa is displayed to the indicator 5, the display control unit 9 displays the left-rearward image IML which is the latest captured image by the left camera 3L, and a right-rearward image IMR which is the latest captured image by the right camera 3R, as is shown in a central view of a second row in Fig. 10. In this case, the left-rearward image IML is displayed to the left screen area of the indicator 5, and the right-rearward image IMR is displayed to the right screen area of the indicator 5. The distance confirmation line Ld which gives an indication of the distance from the self-vehicle 2 is added to both of the left-rearward image IML and the right-rearward image IMR.

Thereafter, in a case where the display-change operation switch 7 is again press-operated, at a state in which the left-rearward image IML and the right-rearward image IMR are displayed to the indicator 5, the display control unit 9 resumes the displayed image of the indicator 5 to the normal navigation image NVa, as is shown in a view of a third (lowermost) row in Fig. 10.

Further, in a case where the course change to the left side of the self-vehicle 2 is detected by the course change detecting unit 10 at a state in which the normal navigation image NVa is displayed to the indicator 5 (in the present embodiment, when the left turn signal is ON-operated), that is, in a case where the course change to the left side is started, the display control unit 9 displays the left-rearward image IML (including the distance confirmation line Ld), as is shown in a left view of the second row in Fig. 10.

Further, in a case where the course change to the right side of the self-vehicle 2 is detected by the course change detecting unit 10 at a state in which the normal navigation image NVa is displayed to the indicator 5 (in the present embodiment, in a case where a right turn signal is ON-operated), that is, in a case where the course change to the righ side is started, the display control unit 9 displays the right-rearward image IMR (including the distance confirmation line Ld), as is shown in a right view of second row inFig. 10.

Thereafter, in a case where the detection of the course change by the course change detecting unit 10 is dissolved (in the present embodiment, in a case where the left turn signal or the right turn signal is OFF-operated), at a state in which the left-rearward image IML or the right-rearward image IMR is displayed to the indicator 5 as is explained above, that is, in a case where the course change to the right side or the left side is finished, the display control unit 9 resumes the displayed image of the indicator 5 to the normal navigation image NVa, as is shown in the view of the third (lowermost) row in Fig. 10.

Even in a case where the display-change operation switch 7 is press-operated before the detection of the course change by the course change detecting unit 10 is dissolved, at a state in which the left-rearward image IML or the right-rearward image IMR is displayed to the indicator 5 as is explained above, the display control unit 9 resumes the displayed image of the indicator 5 to the normal navigation image NVa. Therefore, at a state in which either one or both of the left-rearward image IML and the right-rearward image IMR are displayed to the indicator 5, the displayed image of the indicator 5 is changed to the normal navigation image NVa in both cases, in a case where the display-change operation switch 7 is press-operated.

Further, in a case where the course change to the left side or the right side is detected by the course change detecting unit 10, at a state in which both of the left-rearward image IMR and the right-rearward image IMR are displayed to the indicator 5, the display state of the indicator 5 is switched to the display state of the left-rearward image IML only, and the display state of the right-rearward image IMR only, respectively.

Further, in a case where the course change to the right side is detected by the course change detecting unit 10 at a state in which the left-rearward image IML is displayed to the indicator 5, the displayed image of the indicator 5 is changed from the left-rearward image IML to the right-rearward image IMR. On the other hand, in a case where the course change to the left side is detected by the course change detecting unit 10 at a state in which the right-rearward image IMR is displayed to the indicator 5, the displayed image of the indicator 5 is changed from the right-rearward image IML to the left-rearward image IML.

Next, in a case where the current position of the self-vehicle 2 indicated by the navigation information is changed from the position outside the detailed guide zone to the position inside the detailed guide zone, the display control of the indicator 5 by the display control unit 9 is basically performed in a similar manner as in the first embodiment.

Therefore, in a case where the normal navigation image NVa is displayed to the indicator 5 immediately before the current position of the self-vehicle 2 is changed from the position outside the detailed guide zone to the position inside the detailed guide zone, the display control unit 9 displays the normal navigation image NVa and the detailed guide image NVb to the indicator 5 after the change of the current position of the self-vehicle 2, similar to the case shown in the view of the second row in Fig. 6.

Further, in a case where either one or both of the left-rearward image IML and the right-rearward image IMR are displayed to the indicator 5 immediately before the current position of the self-vehicle 2 is changed from the position outside the detailed guide zone to the position inside the detailed guide zone, the display control unit 9 displays the captured image already displayed to the indicator 5 (either one or both of IML and IMR) and the detailed guide image NVb to the indicator 5, after the change of the current position of the self-vehicle 2.

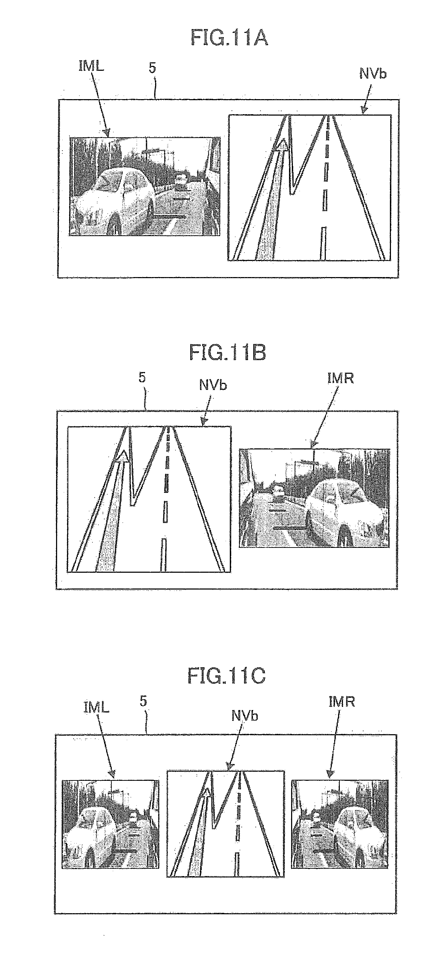

However, in this case, in the present embodiment, the reduced captured image and the detailed guide image NVb are displayed at either one of the arrangement patterns shown in Figs. 11A through C, according to which captured image was displayed to the indicator 5 before the change of the current position of the self-vehicle 2.

Specifically, in a case where the left-rearward image IML is displayed to the indicator 5 before the change of the current position of the self-vehicle 2, the display control unit 9 displays the reduced left-rearward image IML and the detailed guide image NVb to the left screen area and the right screen area of the indicator 5, respectively, as is shown in Fig. 11A.

Further, in a case where the right-rearward image IMR is displayed to the indicator 5 before the change of the current position of the self-vehicle 2, the display control unit 9 displays the reduced right-rearward image IMR and the detailed guide image NVb to the right screen area and the left screen area of the indicator 5, respectively, as is shown in Fig. 11B.

Further, in a case where both of the the left-rearward image IML and the right-rearward image IMR are displayed to the indicator 5 before the change of the current position of the self-vehicle 2, the display control unit 9 displays the reduced left-rearward image IML, the detailed guide image NVb, and the reduced right-rearward image IMR, to the left screen area, the center screen area, and the right screen area of the indicator 5, respectively, as is shown in Fig. 11C.

As is explained above, in a case of displaying the captured image (either one or both of IML and IMR) and the detailed guide image NVb to the indicator 5, in case the current position of the self-vehicle 2 is the position inside the detailed guide zone, either one or both of the left-rearward image IML and the right-rearward image IMR are displayed to the indicator 5, so that the left-rearward image IML, which is the captured image by the left camera 3L, is positioned to the left side with respect to the detailed guide image NVb (on the same side as the left camera 3L in the right-left direction), and the right-rearward image IMR which is the captured image by the right camera 3R is positioned to the right side with respect to the detailed guide image NVb (on the same side as the right camera 3R in the right-left direction).

In the present embodiment, in a case where the current position of the self-vehicle 2 is the position inside the detailed guide zone, and in a case where the course change to the left side or the right side is detected by the course change detecting unit 10, the display of the indicator 5 is controlled to the display state shown in Fig. 11A (a state of displaying the left-rearward image IML and the detailed guide image NVb) and the display state shown in Fig. 11B (a state of displaying the right-rearward image IMR and the detailed guide image NVb), respectively, in either of the display state of the state where the normal navigation image NVa and the detailed guide image NVb are displayed to the indicator 5 (state shown in the view of the second row in Fig. 6), or a state where the captured image (either one or both of IML and IMR) and the detailed guide image NVb are displayed to the indicator 5 (state shown in either one of Figs. 11A through C).

Thereafter, when the detection of the course change by the course change detecting unit 10 is dissolved, the display of the indicator 5 is resumed to the display state immediately after the current position of the self-vehicle 2 is changed from the position outside the detailed guide zone to the position inside the detailed guide zone.

Therefore, in a case where the current position of the self-vehicle 2 is the position inside the detailed guide zone, the display of the detailed guide image NVb is not automatically deleted in resonse to the detection of the course change of the self-vehicle 2 by the course change detecting unit 10.

Further, in a case where the display-change operation switch 7 is press-operated, at a state in which the current position of the self-vehicle 2 is the position inside the detailed guide zone, the display control unit 9 displays either one or both of the left-rearward image IML and the right-rearward image IMR, without performing display of the detailed guide image NVb or the normal navigation image NVa.

In this case, and more specifically in a case where display state of the indicator 5 immediately before the display-change operation switch 7 is press-operated is the state of displaying the normal navigation image NVa and the detailed guide image NVb (the display state in the manner of the view of the second row in Fig. 6), or the state of displaying the detailed guide image NVb and both of the left-rearward image IML and the right-rearward image IMR (the display state in the manner of Fig. 11C), the display control unit 9 displays both of the left-rearward image IML and the right-rearward image IMR to the indicator 5, in the manner of the central view of the second row in Fig. 10.

Further, in a case where the display state of the indicator 5 immediately before the display-change operation switch 7 is press-operated is the state of displaying the left-rearward image IML and the detailed guide image NVb (the display state in the manner of Fig. 11A), the display control unit 9 displays only the left-rearward image IML to the indicator 5, in the manner shown in the left view of the second row in Fig. 10.

Further, in a case where the display state of the indicator 5 immediately before the display-change operation switch 7 is press-operated is the state of displaying the right-rearward image IMR and the detailed guide image NVb (the display state in the manner of Fig. 11B), the display control unit 9 displays only the right-rearward image IMR to the indicator 5, in the manner shown in the right view of the second row in Fig. 10.

Further, in a case where the press-operation of the display-change operation switch 7 is performed again at a state in which the current position of the self-vehicle 2 is the position inside the detailed guide zone, the display control unit 9 resumes the display state of the indicator 5 to the display state immediately after the current position of the self-vehicle 2 is changed from the position outside the detailed guide zone to the position inside the detailed guide zone (in this case, the state of displaying the left-rearward image IML and the detailed guide image NVb), similarly to the case of the first embodiment.

Further, in a case where the current position of the self-vehicle 2 is changed from the position inside the detailed guide zone to the position outside the detailed guide zone at a state in which the detailed guide image NVb is displayed, the display control unit 9 dissolves the displaying of the detailed guide image NVb. Thereafter, the display control unit 9 displays the enlarged view of the image displayed immediately before together with the detailed guide image NVb (the normal navigation image NVa, or either one or both of the left-rearward image IML and the right-rearward image IMR) to the indicator 5, in the manner shown in Fig. 10.

The present embodiment is the same as the above-explained first embodiment, except for matters explained above.

According to such present embodiment, at a state in which the vehicle 2 is traveling in the detailed guide zone, the detailed guide image NVb, which has high necessity to the driver as the information in the detailed guide zone, is displayed continuously to the indicator 5, unless the driver intentionally performs the press-operation of the display-change operation switch 7, similarly to the first embodiment.

Therefore, the display of the detailed guide image NVb will not be automatically deleted without explicit request from the driver. Therefore, in a situation where the vehicle 2 is traveling in the detailed guide zone, the driver is capable of confirming the detailed guide image having high importance continuously and without any problem.

Further, when the driver press-operates the display-change operation switch 7, it becomes possible to display only either one or both of the left-rearward image IML and the right-rearward image IMR to the indicator 5, without displaying the detailed guide image NVb, according to need.

Therefore, the driver may display either one or both of the left-rearward image IML and the right-rearward image IMR to the indicator 5, during course change of the self-vehicle 2 and the like, according to need. By doing so, the driver may aggressively confirm the left or the right-rearward state of the self-vehicle 2.

Further, in a case where the current position of the self-vehicle 2 is changed from the position inside the detailed guide zone to the position outside the detailed guide zone, the display control unit 9 displays the displayed image immediately before the change (the normal navigation image NVa, or either one or both of the left-rearward image IML and the right-rearward image IMR), to the indicator 5, together with the detailed guide image NVb. Therefore, the displayed image that the driver was observing immediately before the change will not be automatically deleted from the indicator 5 immediately after the change, without the request from the driver, similarly to the first embodiment.

Therefore, according to the present embodiment, it becomes possible to display the navigation information configured from the normal navigation image NVa and the detailed guide image NVb, and the display of the captured image of the rearward of the vehicle 2, to the indicator 5, in a manner appropriately reflecting the request or the necessity of the driver, similarly to the first embodiment.

Further, in the present embodiment, in a situation where the vehicle 2 is traveling in the detailed guide zone, either one or both of the left-rearward image IML and the right-rearward image IMR are displayed to the indicator 5, such that the left-rearward image IML, which is the captured image by the left camera 3L, is positioned to the left side with respect to the detailed guide image NVb (on the same side as the left camera 3L in the right-left direction), and the right-rearward image IMR which is the captured image by the right camera 3R is positioned to the right side with respect to the detailed guide image NVb (on the same side as the right camera 3R in the right-left direction).

Therefore, it becomes possible to avoid the situation where the driver confuses either one of the left-rearward image IML and the right-rearward image IMR as the image of the other side. As such, the driver may accurately recognize the situation of the left rearward or the right rearward of the self-vehicle 2 with the left-rearward image IML or the right-rearward image IMR, respectively.

In the first and the second embodiment, explanation is given taking as an example a case where the vehicle 2 is a right-handled vehicle. However, the vehicle 2 may be a left-handled vehicle.

Further, in a case where the vehicle 2 is a left-handled vehicle, then only the right camera 3R out of the left camera 3L and the right camera 3R may be mounted to the vehicle 2. In this case, in a case where the right-rearward image IMR and the detailed guide image NVb are displayed to the indicator 5 at a state in which the vehicle 2 is traveling in the detailed guide zone, the right-rearward image IMR and the detailed guide image NVb may be displayed to the indicator 5 in the manner shown in, for example, Fig. 11B, but also the right-rearward image IMR may be displayed to the left screen area of the detailed guide image NVb

Further, in a case where only the right camera 3R is mounted to the vehicle 2, it is preferable that, opposite to the case of the first embodiment, the right-rearward image IMR is not displayed to the indicator 5 when detecting the course change to the left side, and the right-rearward image IMR is displayed to the indicator 5 when detecting the course change to the right side.

## Claims

1. A driving assistance device for a vehicle equipped with a navigation device, a camera which captures a side-rearward of at least either one side of a right side and a left side of the vehicle, and an indicator which displays navigation information output from the navigation device and a captured image by the camera, the driving assistance device comprising:
a display-change operation switch which outputs a display-change signal instructing a display state of the indicator to change from one of a state in which the navigation information is displayed and a state in which the captured image is displayed, to the other;
a course change detecting element which detects an existence or non-existence of a course change of the vehicle; and
a display control element which controls the display state of the indicator, according to a current position of the vehicle detected by the navigation device, an output of the display-change operation switch, and a detection result of the course change detecting element;
wherein
the display control element is configured to have a function of displaying at least a detailed guide information out of the navigation information to the indicator, in a case where the current position of the vehicle is a position inside a preliminarily set detailed guide zone, a function of changing the display state of the indicator from one of the state in which the navigation information is displayed and the state in which the captured image is displayed to the other, in a case where the display-change signal is output from the display-change operation switch in case the current position of the vehicle is a position outside the detailed guide zone, and a function of displaying the captured image to the indicator, in a case where a course change of the vehicle is detected by the course change detecting element in case the current position of the vehicle is the position outside the detailed guide zone, and also maintains the display of the detailed guide information to the indicator, without depending on the detection result of the course change detecting element, in a case where the current position of the vehicle is the position inside the detailed guide zone.

2. The driving assistance device according to Claim 1,
wherein the course change detecting element detects the existence or non-existence of the course change of the vehicle, at least based on an operating state of a turn indicator of the vehicle.

3. The driving assistance device according to Claim 1,
wherein the display control element displays the captured image to the indicator, without displaying the detailed guide information to the indicator, in a case where the display-change signal is output from the display-change operation switch in case the current position of the vehicle is the position inside the detailed guide zone, until the display-change signal is output again.

4. The driving assistance device according to Claim 1,
wherein the display control element displays the captured image and the detailed guide information to the indicator, in a case where the current position of the vehicle is changed from the position outside the detailed guide zone to the position inside the detailed guide zone, at a state in which the captured image is displayed to the indicator, until the current position of the vehicle is thereafter changed to the position outside the detailed guide zone, or until the display-change signal is output from the display-change operation switch.

5. The driving assistance device according to Claim 1,
wherein the camera is a camera capturing the side-rearward of only one side of the right side and the left side of the vehicle, and
the display control element displays the captured image to the indicator, in a case where the course change of the vehicle to the one side out of the right side and the left side of the vehicle is detected by the course change detecting element, at a state in which the current position of the vehicle is the position outside the detailed guide zone and also the navigation information is displayed to the indicator, and maintains the display of the navigation information to the indicator, without displaying the captured image to the indicator, in a case where the course change of the vehicle to the other side out of the right side and the left side of the vehicle is detected by the course change detecting element in such state.

6. The driving assistance device according to Claim 4,
wherein the camera is configured from a right camera which captures a right-rearward of the vehicle, and a left camera which captures a left-rearward of the vehicle, and
the display control element displays the captured image of the right camera to the indicator, in a case where the course change to the right side of the vehicle is detected by the course change detecting element, at a state in which the current position of the vehicle is the position outside the detailed guide zone, and also the navigation information is displayed to the indicator, displays the captured image of the left camera to the indicator, in a case where the course change to the left side of the vehicle is detected by the course change detecting element in such state, and displays the captured image and the detailed guide information to the indicator, such that the captured image of the right camera or the captured image of the left camera is positioned to a same side as the camera out of a right side and a left side of the indicator, and also the detailed guide information is positioned to the opposite side thereof, in a case where the current position of the vehicle is changed from the position outside the detailed guide zone to the position inside the detailed guide zone, in a state in which the captured image of the right camera or the left camera is displayed, until the current position of the vehicle is thereafter changed to the position outside the detailed guide zone, or the display-change signal is output from the display-change operation switch.

## Amended claims

### Amended claims under Art. 19.1 PCT

**1.** A driving assistance device for a vehicle equipped with a navigation device, a camera which captures a side-rearward of at least either one side of a right side and a left side of the vehicle, and an indicator which displays navigation information output from the navigation device and a captured image by the camera, the driving assistance device comprising:
a display-change operation switch which outputs a display-change signal instructing a display state of the indicator to change from one of a state in which the navigation information is displayed and a state in which the captured image is displayed, to the other;
a course change detecting element which detects an existence or non-existence of a course change of the vehicle; and
a display control element which controls the display state of the indicator, according to a current position of the vehicle detected by the navigation device, an output of the display-change operation switch, and a detection result of the course change detecting element;
wherein
the display control element is configured to have a function of displaying at least a detailed guide information out of the navigation information to the indicator, in a case where the current position of the vehicle is a position inside a preliminarily set detailed guide zone, a function of changing the display state of the indicator from one of the state in which the navigation information is displayed and the state in which the captured image is displayed to the other, in a case where the display-change signal is output from the display-change operation switch in case the current position of the vehicle is a position outside the detailed guide zone, and a function of displaying the captured image to the indicator, in a case where a course change of the vehicle is detected by the course change detecting element in case the current position of the vehicle is the position outside the detailed guide zone, and also maintains the display of the detailed guide information to the indicator, without depending on the detection result of the course change detecting element, in a case where the current position of the vehicle is the position inside the detailed guide zone.

**2.** The driving assistance device according to Claim 1,
wherein the course change detecting element detects the existence or non-existence of the course change of the vehicle, at least based on an operating state of a turn indicator of the vehicle.

**3.** The driving assistance device according to Claim 1,
wherein the display control element displays the captured image to the indicator, without displaying the detailed guide information to the indicator, in a case where the display-change signal is output from the display-change operation switch in case the current position of the vehicle is the position inside the detailed guide zone, until the display-change signal is output again.

**4.** The driving assistance device according to Claim 1,
wherein the display control element displays the captured image and the detailed guide information to the indicator, in a case where the current position of the vehicle is changed from the position outside the detailed guide zone to the position inside the detailed guide zone, at a state in which the captured image is displayed to the indicator, until the current position of the vehicle is thereafter changed to the position outside the detailed guide zone, or until the display-change signal is output from the display-change operation switch.

**5.** The driving assistance device according to Claim 1,
wherein the camera is a camera capturing the side-rearward of only one side of the right side and the left side of the vehicle, and
the display control element displays the captured image to the indicator, in a case where the course change of the vehicle to the one side out of the right side and the left side of the vehicle is detected by the course change detecting element, at a state in which the current position of the vehicle is the position outside the detailed guide zone and also the navigation information is displayed to the indicator, and maintains the display of the navigation information to the indicator, without displaying the captured image to the indicator, in a case where the course change of the vehicle to the other side out of the right side and the left side of the vehicle is detected by the course change detecting element in such state.

**6.** The driving assistance device according to Claim 4,
wherein the camera is configured from a right camera which captures a right-rearward of the vehicle, and a left camera which captures a left-rearward of the vehicle,
and
the display control element displays the captured image of the right camera to the indicator, in a case where the course change to the right side of the vehicle is detected by the course change detecting element, at a state in which the current position of the vehicle is the position outside the detailed guide zone, and also the navigation information is displayed to the indicator, displays the captured image of the left camera to the indicator, in a case where the course change to the left side of the vehicle is detected by the course change detecting element at the state, and displays the captured image and the detailed guide information to the indicator, such that the captured image of the right camera or the captured image of the left camera is positioned to a same side as the camera out of a right side and a left side of the indicator, and also the detailed guide information is positioned to the opposite side thereof, in a case where the current position of the vehicle is changed from the position outside the detailed guide zone to the position inside the detailed guide zone, in a state in which the captured image of the right camera or the left camera is displayed, until the current position of the vehicle is thereafter changed to the position outside the detailed guide zone, or the display-change signal is output from the display-change operation switch.

**7.** (New) The driving assistance device according to Claim 1,
wherein the display control element displays the navigation information including the detailed guide information to the indicator, in a case where the current position of the vehicle is changed from the position outside the detailed guide zone to the position inside the detailed guide zone, at a state in which the navigation information is displayed to the indicator, and thereafter displays the captured image and the detailed guide information to the indicator, in a case where the course change of the vehicle is detected by the course change detecting element, at a state in which the current position of the vehicle is the position inside the detailed guide zone, and thereafter displays only the captured image out of the captured image and the navigation information including the detailed guide information to the indicator, in a case where the display-change signal is output from the display-change operation switch, at a state in which the current position of the vehicle is the position inside the detailed guide zone.

**8.** (New) The driving assistance device according to Claim 4,
wherein the display control element displays only the captured image out of the captured image and the navigation information including the detailed guide information to the indicator, in a case where the display-change signal is output from the display-change operation switch, at a state in which the current position of the vehicle is the position inside the detailed guide zone, and also the captured image and the detailed guide information are displayed to the indicator.

**9.** (New) The driving assistance device according to Claim 1,
wherein the camera is configured from a right camera which captures right-rearward of the vehicle, and a left camera which captures left-rearward of the vehicle, and
the display control element displays only the captured images of both of the right camera and the left camera out of the both captured images and the navigation information including the detailed guide information to the indicator, in a case where the display-change signal is output from the display-change operation switch, at a state in which the current position of the vehicle is the position inside the detailed guide zone, and also the detailed guide information is displayed to the indicator.

**10.** (New) The driving assistance device according to Claim 4,
wherein the camera is configured from a right camera which captures right-rearward of the vehicle, and a left camera which captures left-rearward of the vehicle, and
the display control element displays the captured images of both of the right camera and the left camera to the indicator, in a case where the display-change signal is output from the display-change operation switch, at a state in which the current position of the vehicle is the position outside the detailed guide zone, and also the navigation information is displayed to the indicator, and thereafter displays the captured images of both of the right camera and the left camera and the detailed guide information to the indicator, in a case where the current position of the vehicle is changed from the position outside the detailed guide zone to the position inside the detailed guide zone, at a state in which the captured images of both of the right camera and the left camera are displayed to the indicator.

**11.** (New) The driving assistance device according to Claim 10,
wherein the display control element displays only the captured images of both of the right camera and the left camera out of the both captured images and the navigation information including the detailed guide information to the indicator, in a case where the display-change signal is output from the display-change operation switch, at a state in which the current position of the vehicle is the position inside the detailed guide zone, and also the captured images of both of the right camera and the left camera and the detailed guide information are displayed to the indicator.

**12.** (New) The driving assistance device according to Claim 10,
wherein the display control element displays the detailed guide information and the captured image of only one of the right camera and the left camera to the indicator, in a case where the course change of the vehicle is detected by the course change detecting element, at a state in which the current position of the vehicle is the position inside the detailed guide zone, and also the detailed guide information and the captured images of both of the right camera and the left camera are displayed to the indicator.

**13.** (New) The driving assistance device according to Claim 1,
wherein the camera is configured from a right camera which captures right-rearward of the vehicle, and a left camera which captures left-rearward of the vehicle, and
the display control element includes a function of displaying the detailed guide information and the captured image of one of the right camera and the left camera to the indicator, in a state in which the current position of the vehicle is the position inside the detailed guide zone, and displays only one of the captured image of the right camera and the left camera out of the one of the captured image and the navigation information including the detailed guide information to the indicator, in a case where the display-change signal is output from the display-change operation switch, at a state in which the current position of the vehicle is the position inside the detailed guide zone, and also the detailed guide information and the one of the captured image are displayed to the indicator.

Statement under Art. 19.1 PCT
(A1) Claim 7 is added, based on paragraphs [0072], [0076], [0080], [0083], and [0084] of the specification at the time of filing, and Fig. 6.

(A2) Claim 8 is added, based on paragraph [0090] of the specification at the time of filing, and Fig. 7.

(A3) Claim 9 is added, based on paragraphs [0128] and [0129] of the specification at the time of filing.

(A4) Claim 10 is added, based on paragraphs [0109] and [0119] of the specification at the time of filing, and Fig. 10 and Fig. 11C.

(A5) Claim 11 is added, based on paragraphs [0128] and [0129] of the specification at the time of filing.

(A6) Claim 12 is added, based on paragraph [0125] of the specification at the time of filing, and Fig. 11A and Fig. 12B.

(A7) Claim 13 is added, based on paragraphs [0119], [0125], [0130], and [0131] of the specification at the time of filing.
